## Europäisches Patentamt

## European Patent Office

## Office européen des brevets

(19)

(11) Veröffentlichungsnummer: **0 162 356**

**A1**

(12) # EUROPÄISCHE PATENTANMELDUNG

(21) Anmeldenummer: **85105408.0**

(22) Anmeldetag: **03.05.85**

(51) Int. Cl.⁴: **G 21 F 9/06**

(30) Priorität: **14.05.84 DE 3417839**

(43) Veröffentlichungstag der Anmeldung:
**27.11.85 Patentblatt 85/48**

(84) Benannte Vertragsstaaten:
**BE CH DE FR GB IT LI NL SE**

(71) Anmelder: **KRAFTWERK UNION AKTIENGESELLSCHAFT**
**Wiesenstrasse 35**
**D-4330 Mülheim (Ruhr)(DE)**

(72) Erfinder: **Stamm, Hubert, Dipl.-Ing. (FH)**
**Äussere Grossweidenmühlstrasse 48**
**D-8500 Nürnberg(DE)**

(72) Erfinder: **Distler, Franz, Dipl.-Ing. (FH)**
**Südhang 7**
**D-8550 Forchheim-Kersbach(DE)**

(74) Vertreter: **Mehl, Ernst, Dipl.-Ing. et al,**
**Postfach 22 01 76**
**D-8000 München 22(DE)**

(54) Verfahren zur Behandlung von Dekontaminationsflüssigkeiten mit organischen Säuren und Einrichtung dazu.

(57) Dekontaminationsflüssigkeiten umfassen meist organische Säuren. Sie werden mit der Dekontaminierung radioaktiv, so daß sie gesichert beseitigt werden müssen. Nach der Erfindung werden die organischen Säuren elektrochemisch zersetzt. Dies führt zu einer wesentlichen Verringerung der letztlich zu lagernden Abfallmengen, weil die Dekontaminationsflüssigkeiten dann zum Beispiel mit Verdampfern stark aufkonzentriert werden können, ohne daß Salze ausfallen.

KRAFTWERK UNION AKTIENGESELLSCHAFT    Unser Zeichen
VPA 84 P 8 5 0 9 E

**Verfahren zur Behandlung von Dekontaminationsflüssigkeiten mit organischen Säuren und Einrichtung dazu.**

Die Erfindung betrifft ein Verfahren zur Behandlung
von Dekontaminationsflüssigkeiten mit organischen
Säuren. Gegenstand der Erfindung ist ferner eine Einrichtung zur Ausübung des vorgenannten Verfahrens.

Dekontaminationsflüssigkeiten mit organischen Säuren
sind zum Beispiel in der deutschen Patentschrift 26 13 351 beschrieben. Sie werden mit der
Dekontaminierung radioaktiv und müssen deshalb gesichert beseitigt werden. Zu ihrer Beseitigung heißt
es in der Patentschrift, daß eine Volumenverringerung
erzielt wird, indem eine Oxidationslösung mit der zum
Beizen verwendeten Citrat-Oxalat-Lösung zusammengemischt wird. Hierbei wird Oxalsäure zu $CO_2$ oxidiert
und das zur oxidativen Behandlung verwendete $KMnO_4$
zu $M_n$ reduziert.

Die Erfindung geht von der Aufgabe aus, die Behandlung
von Dekontaminationsflüssigkeiten mit organischen Säuren zur Verringerung der Restabfallmengen zu verändern,
weil die bekannte Mischung nur einen Teil der insgesamt zu beseitigenden organischen Substanz abbauen
kann. Durch die zur Umwandlung notwendige Äquivalenz
an Kaliumpermanganat ist nämlich eine störende Grenze
gegeben.

Gemäß der Erfindung ist vorgesehen, daß die organischen
Säuren elektrochemisch zersetzt werden. Mit der elektrochemischen Zersetzung gelingt eine Aufspaltung, die die Belastung von Verdampfern oder dergleichen beim anschließenden Konzentrieren wesentlich verringert. Die elektrochemische Zersetzung ist dabei nicht von bestimmten Chemikalien abhängig, so daß alle organischen Anteile erfaßt werden können. Insbesondere erfolgt eine Reduzierung durch anodische Oxidation der organischen Säuren.

Die Erfindung kann sowohl im Durchlauf als auch im Badverfahren verwirklicht werden. Vorzugsweise wird das Badverfahren mit einer kontinuierlichen Umwälzung der Dekontlösung über Vorratsbehälter ausgeführt. Dadurch kann die Elektrolysezelle einschließlich ihrer Elektroden klein gehalten werden.

Eine kleine und damit kostengünstige und raumsparende Bauweise kann auch durch die ständige Bespülung mit Luft unterstützt werden, mit der Zersetzungsgase abgeführt werden können. Insbesondere gelingt es, durch die Luftzufuhr den entstehenden Wasserstoff unter die Konzentration der Explosionsgrenze zu verdünnen. Gleichzeitig kann mit der Luftspülung eine Kühlung erreicht werden.

Die Elektrodenspannung wird vorteilhaft auf 2 bis 4 V Gleichspannung konstant gehalten. Bei Versuchen hat eine Spannung von 3 V günstige Ergebnisse gezeigt.

Die Temperatur der Elektrolysezelle wird vorteilhaft auf 80°C begrenzt. Jedenfalls kann die Erfindung im Temperaturbereich von 20 bis 80°C erfolgreich ausgeführt werden.

Als Einrichtung zur Ausübung des Verfahrens nach der Erfindung kann man eine Elektrolysezelle mit einer Kupferkathode und einer Anode vorsehen, die aus Graphit oder platinhaltigem Material besteht. Dabei liegt die Elektrolysezelle in einem Luftstrom, der von einer Ansaugstelle über Aerosolfilter zu einem Auslaß führt. Die Anode kann als platinhaltiges Material, insbesondere platiniertes Titanstreckmetall, umfassen. Die Platinauflage sollte eine Dicke von mindestens 1,5 μm haben. Für einen kontinuierlichen Betrieb kann die Elektrolysezelle mit einem Vorratsbehälter und einer Pumpe zu einem Umwälzkreis verbunden sein.

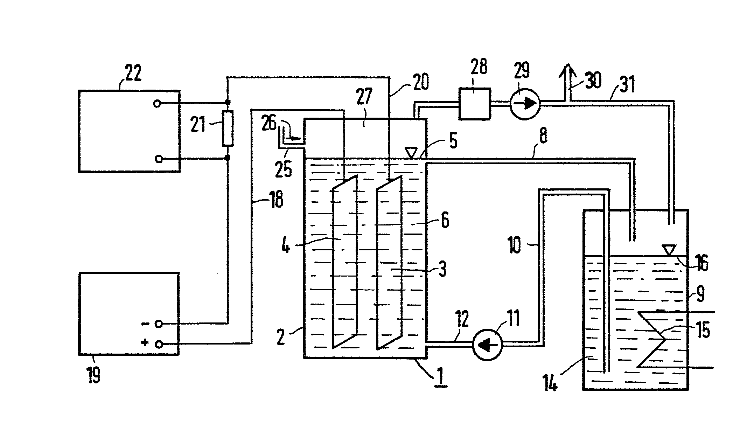

Zur näheren Erläuterung der Erfindung wird anhand der beiliegenden Zeichnung ein Ausführungsbeispiel beschrieben. Dabei zeigt die Figur in schematischer Darstellung eine Einrichtung zur Ausübung des Verfahrens nach der Erfindung.

Mit 1 ist eine Elektrolysezelle bezeichnet. Dabei handelt es sich um ein Glasgefäß 2 mit einer Kathode 3 und einer Anode 4. Das Gefäß 2 ist bis zu dem Flüssigkeitsspiegel 5 mit der zu beseitigenden Dekontaminationsflüssigkeit 6 gefüllt.

Der Flüssigkeitsspiegel 5 ergibt sich durch eine Überlaufleitung 8. Sie führt in einen Vorratsbehälter 9, aus dem eine Saugleitung 10 mit einer Pumpe 11 über den Anschluß 12 zum Boden der Elektrolysezelle 1 zurückführt. Der Vorratsbehälter 9 ist ebenfalls ein Glasgefäß. Sein Flüssigkeitsinhalt 14 kann mit einer Heizung 15 erwärmt werden. Der Flüssigkeitsspiegel ist bei 16 angedeutet.

Die Anode ist über eine elektrische Leitung 18 unmittelbar mit einer Gleichspannungsquelle 19 verbunden. In die Leitung 20 der Kathode 3 ist ein Nebenwiderstand 21 gelegt. An diesem wird eine Spannung für einen Schreiber 22 abgenommen, mit dem die Elektrolyse verfolgt wird.

Die Kathode 3 besteht aus Kupfer, das in Form von einigen ebenen, wenige Millimeter dicken Blechen an einer nicht weiter dargestellten isolierten Halterung befestigt ist, so daß die Kathodenbleche unterhalb des Flüssigkeitsspiegels 5 liegen.

Für die Anode 4 wird Titanstreckmetall mit einer Platinauflage verwendet. Streckmetall ist bekanntlich ein zu einem Gitterwerk geformtes Blech, das eine große Oberfläche hat. Die Platinauflage beträgt 1,5 µm.

Beim Arbeiten der Einrichtung wird die Elektrolysezelle 1 von einem Lufteinlaß 25 her in Richtung des Pfeiles 26 mit Frischluft beaufschlagt. Die Frischluft wird durch den gesamten Luftraum 27 oberhalb des Flüssigkeitsspiegels 5 geführt und gelangt über ein Aerosolfilter 28 und eine Pumpe 29 zu einem Auslaß 30. Der Auslaß 30 kann über eine Leitung 31 auch mit dem Vorratsbehälter 9 verbunden sein.

Mit der Einrichtung werden die zur Dekontamination verwendeten Lösungen organischer Säuren elektrochemisch zersetzt. Nach einer Behandlungszeit von bis zu 50 Stunden bei einer Umwälzung, die 10 bis 100% betragen kann, wird bei Temperaturen zwischen 20 und 80°C eine anodische Oxidation der organischen Substanzen erreicht. Dies ermöglicht eine Weiterbehandlung durch Eindampfen auf viel höhere Werte als bei den bisherigen Behandlungsmöglichkeiten, bei denen durch das Ausfallen von Salzen enge Grenzen bestanden. Die Behandlungszeit kann bei Bedarf durch Zugabe von geringen Mengen an Leitsalzen, zum Beispiel Natriumchlorid oder -sulfat mit etwa 1g/l, reduziert werden.

9 Patentansprüche
1 Figur

Patentansprüche

1. Verfahren zur Behandlung von Dekontaminationsflüssigkeiten mit organischen Säuren, d a d u r c h g e - k e n n z e i c h n e t, daß die organischen Säuren elektrochemisch zersetzt werden.

2. Verfahren nach Anspruch 1, d a d u r c h g e - k e n n z e i c h n e t, daß die organischen Säuren anodisch oxidiert werden.

3. Verfahren nach Anspruch 1 oder 2, d a d u r c h g e k e n n z e i c h n e t, daß die Säuren im Umlauf über einen Vorratsbehälter und eine Elektrolysezelle geführt werden und daß die Elektrolysezelle ständig mit Luft bespült wird.

4. Verfahren nach Anspruch 1, 2 oder 3, d a d u r c h g e k e n n z e i c h n e t, daß die Elektrodenspannung auf 2 bis 4 V konstant gehalten wird.

5. Verfahren nach einem der Ansprüche 1 bis 4, d a - d u r c h g e k e n n z e i c h n e t, daß die Temperatur der Elektrolysezelle auf 80°C begrenzt wird.

6. Verfahren nach einem der Ansprüche 1 bis 5, d a - d u r c h g e k e n n z e i c h n e t, daß die Leitfähigkeit der Dekontaminationsflüssigkeit durch Zugabe von Leitsalzen erhöht wird.

7. Einrichtung zur Ausübung des Verfahrens nach einem der Ansprüche 1 bis 6, d a d u r c h g e k e n n - z e i c h n e t, daß eine Elektrolysezelle (1) mit einer Kupferkathode (3) und einer Anode (4) vorgesehen ist, die aus Graphit oder platinhaltigem Material

0162356

besteht, und daß die Elektrolysezelle (1) in einem
Luftstrom liegt, der von einer Ansaugstelle (25)
über Aerosolfilter (28) zu einem Auslaß (30) führt.

8. Einrichtung nach Anspruch 7, d a d u r c h  g e -
k e n n z e i c h n e t, daß die Anode (4) platiniertes Titanstreckmetall umfaßt.

9. Einrichtung nach Anspruch 7 oder 8, d a d u r c h
g e k e n n z e i c h n e t, daß die Elektrolysezelle
(1) mit einem Vorratsbehälter (9) und einer Pumpe (11)
zu einem Umwälzkreis verbunden ist.

1/1

Europäisches
Patentamt

EUROPÄISCHER RECHERCHENBERICHT

0162356

Nummer der Anmeldung

EP 85 10 5408

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | | | G 21 F 9/06 |
| X | FR-A-2 288 378 (GESELLSCHAFT FÜR KERNFORSCHUNG) * Ansprüche 1,2 * | 1,2,7, 8 | |
| X | DE-A-3 044 196 (HOFFMAN) * Ansprüche 1,2,4 * | 1,6,9 | |
| A | EP-A-0 075 882 (HITACHI) * Ansprüche 1,2 * | 1 | |
| A | GB-A-2 041 975 (REAKTOR-BRENNELEMENT) | | |

RECHERCHIERTE SACHGEBIETE (Int. Cl.4)

G 21 F
C 23 G

Der vorliegende Recherchenbericht wurde für alle Patentansprüche erstellt.

| Recherchenort DEN HAAG | Abschlußdatum der Recherche 29-07-1985 | Prüfer NICOLAS H.J.F. |
|---|---|---|